# FASCICULE DE BREVET EUROPEEN

(11) **EP 3 506 554 B1**
(45) Date de publication et mention de la délivrance du brevet: **09.09.2020**
(21) Numéro de dépôt: 18215806.3
(22) Date de dépôt: 21.12.2018
(51) Int. Cl.: H04L 9/08, H04L 29/06, H04W 12/04

(54) **PROCEDE DE SECURISATION DE BOUT EN BOUT D'UNE COMMUNICATION**
VERFAHREN ZUR ENDE-ZU-ENDE SICHERUNG VON ABFANGBARER KOMMUNIKATION
METHOD FOR END-TO-END SECURING OF INTERCEPTABLE COMMUNICATION

(30) Priorité: 27.12.2017 FR 1701381
(43) Date de publication de la demande: 03.07.2019
(73) Titulaire: Atos Integration, 95870 Bezons (FR)
(72) Inventeur: MARCHESE-RIBEAUX, Alexandre, 95300 Pontoise (FR)
(74) Mandataire: Debay, Damien

(56) Documents cités:
- US-A1- 2009 126 001
- US-A1- 2010 138 660
- US-A1- 2010 153 726
- US-A1- 2016 234 197

## Description

### Domaine de l'invention

Le domaine de l'invention est le domaine de la sécurisation de bout en bout d'une communication.
Par sécurisation de bout en bout on entend une communication au cours de laquelle lorsqu'un message est émis chiffré, il est reçu chiffré tel qu'il a été émis.
Le domaine de l'invention est également celui des communications vocales, et/ou vidéo, établie à travers un réseau de type Internet, c'est-à-dire un réseau sujet à la mise en place d'interception de messages.
Le domaine de l'invention est également celui de la sécurisation des communications sur les terrains d'opération des forces de maintien de l'ordre que ces forces soient civiles ou militaires.

### Etat de la technique antérieur

Dans l'état de la technique on sait établir des communications chiffrées de bout en bout, par exemple en utilisant le protocole d'établissement de session SIP. Pour l'établissement d'une telle communication entre deux équipements terminaux, chaque équipement terminal produit une clé de session à utiliser pour déchiffrer les messages émis par lui. Pour une communication entre deux équipements terminaux, il y a donc au moins deux clés, une pour chaque équipement terminal.
Dans la pratique il y a autant de clés de session que d'équipements terminaux multipliés par le nombre de flux.
Ainsi pour un appel vidéo le terminal appelant produit deux clés de session :
- Une clé première pour chiffrer le flux audio qu'il émet ;
- Une clé deuxième pour chiffre le flux vidéo qu'il émet.
Le terminal appelé fait de même. Pour l'établissement de la communication il y a donc quatre clés de sessions à échanger pour permettre à un équipement terminal de déchiffrer les messages émis par l'autre équipement terminal.

Le problème posé vient du fait que les clés de sessions produites par les équipements terminaux peuvent être prédites. Un attaquant capable de prédire ces clés est donc en mesure, s'il intercepte les messages, d'accéder au contenu des messages échangés entre les terminaux.

Ce problème est connu ainsi qu'une solution dans laquelle un serveur intermédiaire, aussi appelé proxy SIP, substitue les clés produites par les terminaux par des clés produites par lui.
Par exemple si un premier terminal invite un deuxième terminal à établir une communication sécurisée, le message d'invitation comporte une première clé. Ce message d'invitation est traité par le proxy SIP de manière à remplacer la première clé par une deuxième clé plus sûre. Dans ce cas les messages émis par le premier terminal seront :
- Chiffré par le premier terminal avec la première clé ;
- Déchiffré par le serveur proxy ;
- Chiffré par le serveur avec la deuxième clé plus sur ;
- Transmis au deuxième terminal.
La solution de l'état de la technique sécurise donc l'acheminement des messages transmis par le proxy SIP, mais pas les messages émis par les terminaux.
Un attaquant peut donc toujours accéder à tous les messages, mais à condition d'être capable d'intercepter les messages émis par les deux terminaux.
Avec la solution de l'état de la technique il faut donc attaquer les deux terminaux et non plus un seul pour accéder à l'intégralité du contenu d'une communication.

Dans l'état de la technique les communications sécurisées restent donc vulnérables aux attaquants sachant prédire les clés de sessions produites par les agents utilisateurs SIP.

Le document US20100138660 décrit aussi un procédé de sécurisation de bout en bout d'une communication qui repose sur un enregistrement des dispositifs souhaitant communiquer auprès d'un serveur intermédiaire (Fig. 5), l'enregistrement étant préalable à la communication, qui permet aux dispositifs de recevoir une clé TSK en échange d'une demande de leur part contenant une valeur génératrice de clés. Ensuite, lors de la demande de communication, le serveur intermédiaire par lequel transitent les messages ajoute aux messages d'invitation et d'acceptation des dispositifs une clé MSK chiffrée que les dispositifs communicants peuvent déchiffrer à l'aide de leur clé TSK reçue précédemment.
Un inconvénient de cette solution de l'art antérieur provient du nombre d'étapes, et du besoin d'une étape préalable à la demande de communication.

### Exposé de l'invention

L'invention permet de remédier à ces problèmes en permettant à un serveur intermédiaire, le proxy SIP, de produire toutes les clés qui seront utilisées lors des échanges de données. Ainsi plus aucune clé de session n'est prédictible et la sécurité des échanges s'en trouve renforcée.

Dans ce dessein l'invention a pour objet un procédé de sécurisation de bout en bout d'une communication entre au moins un premier équipement terminal et un deuxième équipement terminal, l'établissement de la communication se faisant en utilisant un protocole d'établissement de session permettant d'échanger des clés de sessions, chaque équipement terminal utilisant une clé de session pour chiffrer les données de communication qu'il émet, les clés de sessions étant échangées de manière sécurisée via un serveur intermédiaire utilisant un certificat de sécurité caractérisé en ce que le procédé met en œuvre les étapes suivantes mise en œuvre par le serveur intermédiaire:
- Réception d'un premier message d'invitation, le premier équipement terminal invitant le deuxième équipement terminal, le premier message d'invitation comportant au moins un attribut de description d'une première clé de session ;
- Production d'un deuxième message d'invitation, le premier équipement terminal invitant le deuxième équipement terminal, le deuxième message d'invitation comportant :
   ∘ Une première clé de session, la première clé de session étant configurée par le serveur intermédiaire selon l'attribut de description de la première clé de session, la première clé de session étant destinée à être utilisée pour chiffrer/déchiffrer les données émises par le premier équipement terminal ;
   ∘ Au moins une deuxième clé de session, la deuxième clé de session étant configurée par le serveur intermédiaire, la deuxième clé de session étant destinée à être utilisée pour chiffrer/déchiffrer les données émises par le deuxième équipement terminal ;
- Emission du deuxième message d'invitation ;
- Réception d'un premier message d'acceptation, le deuxième équipement terminal acceptant l'invitation ;
- Production d'un deuxième message d'acceptation, le deuxième équipement terminal acceptant l'invitation, le deuxième message d'acceptation comportant :
   ∘ La première clé de session ;
   ∘ La au moins deuxième clé de session
- Emission du deuxième message d'acceptation.

Ainsi, le procédé selon la présente invention s'affranchit de l'étape d'enregistrement préalable des équipements communicants au serveur, en permettant au serveur de produire et configurer lui-même 2 clés et de les envoyer dans les messages d'invitation et d'acceptation sécurisés.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- La configuration de la première clé ou de la deuxième clé se fait par une requête à un serveur de sécurité configuré pour mettre en œuvre un générateur de séquences aléatoires, les clés étant produites en utilisant ledit générateur de séquences aléatoires ;
- Une requête au serveur de sécurité permet d'obtenir un lot de clés de session, le lot est enregistré par le serveur intermédiaire dans un premier buffer de clés, la configuration de la première clé et de la deuxième clé se faisant à partir du contenu du premier buffer, chaque clé enregistrée dans le premier buffer étant à usage unique ;
- Le serveur intermédiaire comporte un deuxième buffer de clés, le deuxième buffer de clés est alimenté par une requête au serveur de sécurité, le serveur intermédiaire utilise le premier buffer de clés tant qu'il contient des clés puis utilise le deuxième le buffer et remplit à nouveau le premier par une requête au serveur de sécurité, les premier et deuxième buffers étant cycliquement utilisés ;
- Le protocole d'établissement de session est le protocole SI P ;
- Le protocole d'établissement de session est le protocole SIP et :
   ∘ La première clé de session est envoyée au premier équipement terminal comme valeur d'un attribut nommé a=hsmkey ;
   ∘ La deuxième clé de session est envoyée au premier équipement terminal comme valeur d'un attribut nommé a=crypto ;
   ∘ La première clé de session est envoyée au deuxième équipement terminal comme valeur d'un attribut nommé a=crypto ;
   ∘ La deuxième clé de session est envoyée au deuxième équipement terminal comme valeur d'un attribut nommé a=hsmkey ;
- La communication est une communication vocale ;
- La communication est une communication vidéo.

### Brève description des figures

D'autres caractéristiques et avantages de l'invention ressortiront à la lecture de la description qui suit, en référence aux figures annexées, qui illustrent :
- La figure 1, une illustration d'une infrastructure permettant la mise en œuvre du procédé de sécurisation selon l'invention ;
- La figure 2, une illustration d'étapes du procédé de sécurisation selon l'invention.
Pour plus de clarté, les éléments identiques ou similaires sont repérés par des signes de référence identiques sur l'ensemble des figures.
L'invention sera mieux comprise à la lecture de la description qui suit et à l'examen des figures qui l'accompagnent. Celles-ci sont présentées à titre indicatif et nullement limitatif de l'invention.

### Description détaillée

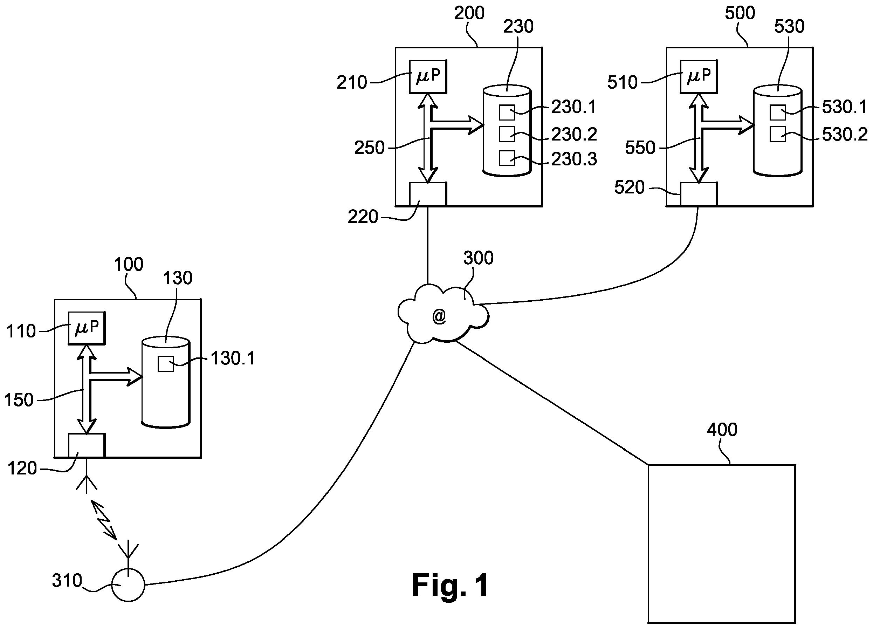

La figure 1 montre un serveur 200 intermédiaire. Le serveur 200 intermédiaire est aussi appelé un serveur proxy. Dans le cas de l'utilisation du protocole d'établissement de communication SIP (Session Initiation Procotol pour Protocole d'Initialisation de Session) on parle encore de proxy SIP.

La figure 1 montre que le serveur 200 intermédiaire comporte :
- Un microprocesseur 210 ;
- Une interface 220 de communication. Une telle interface de communication est, par exemple, une carte Ethernet, une carte InfiniBand, une carte Wifi, ... L'interface 220 de communication permet au serveur 200 intermédiaire de communiquer avec d'autre dispositifs ;
- Des moyens 230 de stockage. Des moyens de stockage sont, par exemple, des disques durs, des disques à état solide, une grille de disques,.... Ces moyens sont locaux ou distants.

D'une manière plus générale, pour d'autres dispositifs, les moyens de stockage peuvent aussi être réalisés avec des composants de type mémoire flash ou EPROM. La figure 1 montre que le microprocesseur du serveur intermédiaire, l'interface de communication du serveur intermédiaire et les moyens de stockage du serveur intermédiaire sont interconnectés par un bus 250.

La figure 1 montre que les moyens 230 de stockage du serveur intermédiaire comportent plusieurs zones parmi lesquelles au moins :
- Une zone 230.1 de sécurisation d'une communication. Cette zone de sécurisation d'une communication comporte des codes instructions qui, lorsqu'ils sont mis en œuvre par le serveur intermédiaire, conduisent celui-ci à mettre en œuvre le procédé selon l'invention;
- Une zone 230.2 de buffers de clés utile dans une variante de l'invention pour la gestion de clés de session de communication.
- Une zone 230.3 de certificat comportant un certificat d'identification du serveur intermédiaire pour l'utilisation d'un protocole de chiffrement de type SSL (Secure Socket Layer pour protocole SSL) ou TLS (Transport Layer Security pour Couche Transport Sécurisée).

La figure 1 montre que le serveur 200 intermédiaire est connecté à un réseau 300 publique, par exemple le réseau Internet. On note que l'invention est aussi opérante si le réseau public n'est pas le réseau Internet mais un réseau compatible avec des protocoles utilisés sur le réseau Internet en particulier les protocoles nommés IP et les protocoles de transport associés.

Lorsque l'on prête une action à un dispositif celle-ci est en fait réalisée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de ladite application. Un message comporte au moins un champ adresse de destination, un champ d'adresse d'émetteur et une charge utile. Ces principes sont applicables que le dispositif soit réel ou virtuel.

La figure 1 montre un premier équipement terminal 100. Le premier équipement terminal comporte :
- Un microprocesseur 110 ;
- Une interface 120 de communication. Dans le cas d'un équipement terminal l'interface de communication est, par exemple, une interface configurée pour pouvoir communiquer sur un réseau de téléphonie mobile, en particulier en mode données;
- Des moyens 130 de stockage.

La figure 1 montre que le microprocesseur du premier équipement terminal, l'interface de communication du premier équipement terminal et les moyens de stockage du premier équipement terminal sont interconnectés par un bus 150.

La figure 1 montre que le premier équipement terminal 100 est connecté à une station de base 310 d'un réseau mobile non représenté. La station de base 310 est connectée au réseau public. Le premier équipement terminal est donc connecté au réseau public.

La figure 1 montre que les moyens 130 de stockage du premier équipement terminal comportent plusieurs zones parmi lesquels au moins :
- Une zone 130.1 agent SIP comportant des codes instructions pour permettre à l'équipement terminal de mettre en œuvre des communications selon le protocole SIP.

Dans la pratique le premier équipement terminal est un téléphone intelligent, aussi appelé smartphone, sur lequel on a installé un logiciel de communication compatible avec le protocole SIP. Un tel téléphone s'appelle aussi un téléphone SIP ou un SIP-phone. Un tel logiciel est également installable sur une tablette ou un ordinateur individuel. L'installation d'un tel logiciel fait que l'on peut parler du dispositif sur lequel il est installé, comme d'un agent utilisateur.

Dans le contexte d'utilisation d'un protocole de communication on parle d'agent utilisateur souvent appelé UA (pour User Agent). Un agent utilisateur est un programme mis en œuvre par un équipement terminal pour établir et réaliser une communication selon ledit protocole de communication. Les agents utilisateurs sont mis en relation via un serveur proxy. Dans la littérature on confond souvent l'agent utilisateur, logiciel, avec le terminal utilisateur, matériel. La réunion du matériel et du logiciel est aussi appelé un équipement terminal.

La figure 1 montre un deuxième équipement terminal 400 qui est lui aussi un agent utilisateur de même nature que le premier équipement terminal. C'est-à-dire que le premier équipement terminal et le deuxième équipement terminal peuvent établir une communication l'un avec l'autre.

La figure 1 montre un serveur 500 de sécurité. Le serveur 500 de sécurité comporte :
- Un microprocesseur 510 ;
- Une interface 520 de communication permettant de connecter le serveur de sécurité au réseau 300 public. Le serveur de sécurité est donc en mesure de communiquer avec le serveur intermédiaire ;
- Des moyens 530 de stockage.
La figure 1 montre que le microprocesseur du serveur de sécurité, l'interface de communication du serveur de sécurité et les moyens de stockage du serveur de sécurité sont interconnectés par un bus 550.

Dans une variante de l'invention le serveur intermédiaire comporte une deuxième interface de communication pour pouvoir communiquer avec le serveur de sécurité sans passer par le réseau 300 public. Dans cette variante le serveur de sécurité est isolé sur un réseau privé et donc protégé.

La figure 1 montre que les moyens 530 de stockage du serveur de sécurité comportent plusieurs zones parmi lesquels au moins :
- Une zone 530.1 générateur de nombre aléatoire comportant des codes instructions dont la mise en œuvre permet d'obtenir des nombres aléatoires sur, c'est-à-dire non prédictible.
- Une zone 530.2 générateur de clés de session comportant des codes instructions dont la mise en œuvre permet la production de clés de session, c'est-à-dire de chaîne de caractère d'une longueur prédéterminée, en utilisant le générateur de nombre aléatoire précédemment décrit. Une clé de session est classiquement utilisée comme clé de chiffrement symétrique pour des échanges de messages.

Dans la pratique le serveur de sécurité est assimilable à un server HSM, aussi simplement nommé HSM. HSM signifie Hardware Security Module pour Module Matériel de Sécurité. On note qu'il peut s'agir d'un composant physique du serveur intermédiaire. Mais dans le serveur intermédiaire a une interface de communication publique, ce n'est pas la solution préférée.

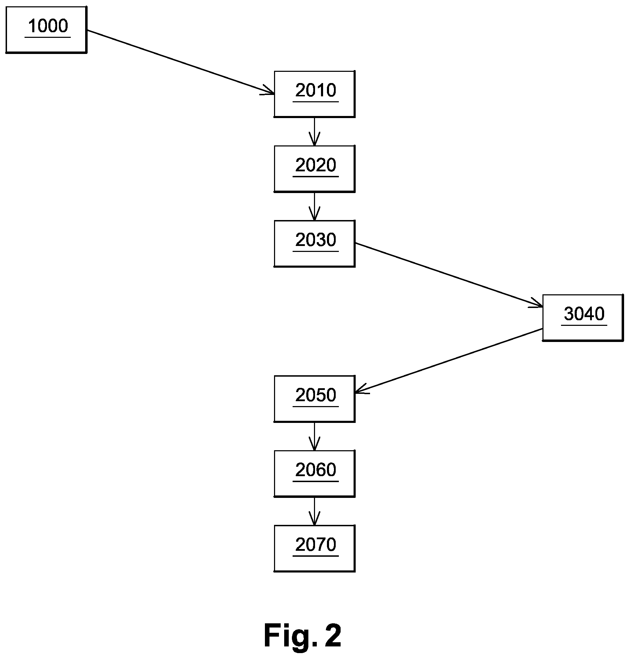

La figure 2 montre une étape 1000 préliminaire dans laquelle un utilisateur du premier équipement utilise le premier équipement terminal pour émettre un appel visant à inviter un utilisateur du deuxième équipement terminal à établir une communication vocale ou vidéo en utilisant le protocole SIP. Il s'agit d'une étape préliminaire 1000 de numérotation. Une telle étape est, par exemple, la sélection d'un contact dans un carnet d'adresses électronique. La mise en œuvre de l'étape de numérotation par un utilisateur provoque la production puis l'émission, vers le serveur intermédiaire d'un premier message d'invitation. La charge utile de ce premier message d'invitation comporte au moins la ligne suivante :
a=hsmkey:1 conf

Il s'agit d'une ligne selon le protocole SIP dans qui peut se décomposer comme suit :
- a=hsmkey signifie que l'on souhaite établir une communication sécurisée,
- 1 signifie qu'il s'agit d'une première propostion
- conf est le contrat de la première proposition. conf est aussi considéré comme un attribut de clé de session, c'est-à-dire un attribut dont la valeur désigne des propriétés de la session. conf peut prendre plusieurs valeurs selon le cryptage souhaité au cours de la session. Des valeurs typiques sont :
   ∘ AES_CM_128_HMAC_SHA1_32, ou
   ∘ AES_CM_128_HMAC_SHA1_80.

Dans une étape 2010 de réception du premier message d'invitation le serveur intermédiaire reçoit le premier message d'invitation produit par le premier équipement terminal. Dans l'étape de réception du premier message d'invitation le serveur intermédiaire analyse la charge utile du message reçu et y trouve une ligne du type :
a=hsmkey:1 conf
Cela signifie que le serveur doit piloter l'établissement d'une communication sécurisée entre le premier équipement terminal et le deuxième équipement terminal.

Le serveur intermédiaire passe alors à une étape 2020 de production d'un deuxième message d'invitation pour inviter le deuxième équipement terminal de la part du premier équipement terminal. La charge utile de ce deuxième message d'invitation comporte au moins les lignes suivantes :
a=crypto:1 conf inline:valeur_clé_1
a=hsmkey:1 conf inline:valeur_clé_2
La ligne commençant par a=crypto stipule que l'équipement terminal recevant l'invitation va recevoir des données cryptées émises par l'invitant en utilisant pour le décryptage l'algorithme spécifié par conf et en utilisant une première clé de session dont la valeur est valeur_clé_1.
La ligne commençant par a=ksmkey stipule que l'équipement terminal reçevant l'invitation doit émettre, vers l'invitant, des données cryptées en utilisant pour le cryptage l'algorithme spécifié par conf et en utilisant une deuxième clé de session dont la valeur est valeur_clé_2.

Une fois que le deuxième message d'invitation produit, le serveur intermédiaire l'envoi, dans une étape 2030 d'émission du deuxième message d'invitation, au deuxième équipement terminal.

Dans une étape 3040 de réception d'un message d'invitation le deuxième équipement terminal reçoit le deuxième message d'invitation le traite, produit un premier message d'acceptation qu'il émet vers le serveur intermédiaire.

Dans une étape 2050 de réception d'un premier message d'acceptation le serveur intermédiaire reçoit le premier message d'acceptation produit par le deuxième équipement terminal. La charge utile du premier message d'acceptation comporte au moins une ligne du type :
a=crypto:1 conf inline:valeur_clé_2

Cette ligne signifie que le deuxième équipement terminal, le terminal invité, est d'accord pour utiliser l'algorithme spécifié par conf avec une clé dont la valeur est valeur_clé_2 pour crypter les message qu'il émet à destination du premier équipement terminal, le terminal invitant.

Le serveur intermédiaire passe alors à une étape 2060 de production d'un deuxième message d'acceptation.
La charge utile de ce deuxième message d'acceptation comporte au moins les lignes suivantes :
a=crypto:1 conf inline:valeur_clé_2
a=hsmkey:1 conf inline:valeur_clé_1
La ligne commençant par a=crypto stipule que l'équipement terminal recevant l'acceptation va recevoir des données cryptées émises par l'invité en utilisant pour le décryptage l'algorithme spécifié par conf et en utilisant la deuxième clé de session dont la valeur est valeur_clé_2.
La ligne commençant par a=ksmkey stipule que l'équipement terminal reçevant l'acceptation doit émettre, vers l'invité, des données cryptées en utilisant pour le cryptage l'algorithme spécifié par conf et en utilisant la première clé de session dont la valeur est valeur_clé_1.

Une fois le deuxième message d'acceptation produit, le serveur l'intermédiaire l'émet, dans une étape 2070 d'émission d'un deuxième message d'acceptation, vers le premier équipement terminal.

A partir de ce point, chaque équipement terminal est en connaissance des informations lui permettant d'échanger des données cryptées avec l'autre en utilisant le protocole SRTP, c'est-à-dire le protocole RTP sécurisé. Le protocole RTP est un protocole utilisé pour échanger des flux de voix et d'images. RTP signifie Real-time Transport Protocol pour protocole de transport en temps réel.

Les données émises par le deuxième équipement terminal sont destinées à être reçues par le premier équipement terminal. Donc la deuxième clé de session peut aussi être considéré comme étant destinée à chiffrer/déchiffres les données émises vers le premier terminal.

Grâce à l'invention toutes les clés de sessions utilisées sont configurées par le serveur intermédiaire. Les clés sont configurées à l'étape 2020 de production d'un deuxième message d'invitation. Par configurée on entend produite et écrite dans le message. Pour la production elle peut être locale, comme le ferait un agent utilisateur dans le cas de l'état de la technique, locale renforcée en utilisant un composant dédié, ou délégué à un serveur de sécurité.
Dans le cas où la production est déléguée à un serveur de sécurité, par exemple le serveur 500 de sécurité, le serveur intermédiaire émet un message de demande de clé de session vers le serveur de sécurité. Ces demandes sont standardisées selon le protocole PKCS#11.

Dans une variante de l'invention les clés ne sont pas demandées une par une mais par lots et gérées dans un double buffer. Le double buffer est enregistré dans la zone 230.2 de buffers du serveur intermédiaire. Le double buffer comporte deux buffers l'un actif, l'autre en attente. Dans le cas présent, un buffer est une zone mémoire structurée pour enregistrer des clés de session. La lecture d'une clés de session la supprime du buffer. Le fonctionnement dans l'invention est le suivant :
- Au démarrage du serveur intermédiaire les deux buffers sont remplis par le serveur intermédiaire qui émet des requêtes vers le serveur de sécurité. L'un des deux buffers est désigné comme étant le buffer actif l'autre devenant le buffer en attente.
- Lorsque le serveur intermédiaire a besoin d'une clé de session il la lit dans le buffer actif. Si le buffer actif devient vide après alors :
   ∘ Le buffer actif et le buffer en attente échange leurs rôles ;
   ∘ Le serveur intermédiaire émet des requêtes vers le serveur de sécurité pour obtenir des clés de session lui permettant de remplir le buffer devenu en attente.
Les buffers sont donc utilisés selon un cycle dans lequel chaque buffer est cycliquement actif et en attente.
Cette façon de procéder permet au serveur intermédiaire d'éviter des latences induites par les échanges avec le serveur de sécurité. Ce résultat peut également être obtenu avec un seul buffer tournant dont le re-remplissage est piloté par un nombre minimal de clés que doit contenir un tel buffer tournant.

Dans la pratique les échanges entre les équipements terminaux et le serveur intermédiaire et les échanges entre le serveur intermédiaire et le serveur de sécurité se font de manière sécurisée. Cette sécurisation est obtenue par l'utilisation du protocole SSL, TLS ou d'un équivalent. A cette fin le serveur intermédiaire dispose d'au moins un certificat pour permettre ces connexions sécurisées.

L'invention permet donc de renforcer la sécurité des communications établies selon le protocole SIP. Ce renforcement est obtenu par le renforcement des clés de sessions utilisées, notamment pour le protocole SRTP. L'invention s'appuie sur des éléments existant du protocole SIP sans avoir besoin de le modifier elle est donc facilement utilisable.

## Revendications

1. Procédé de sécurisation de bout en bout d'une communication entre au moins un premier équipement terminal (100) et un deuxième équipement terminal (400), l'établissement de la communication se faisant en utilisant un protocole d'établissement de session permettant d'échanger des clés de sessions, chaque équipement terminal utilisant une clé de session pour chiffrer les données de communication qu'il émet, les clés de sessions étant échangées de manière sécurisée via un serveur (300) intermédiaire utilisant un certificat (230.3) de sécurité **caractérisé en ce que** le procédé met en œuvre les étapes suivantes mise en œuvre par le serveur intermédiaire:
- Réception (2010) d'un premier message d'invitation, le premier équipement terminal invitant le deuxième équipement terminal, le premier message d'invitation comportant au moins un attribut de description d'une première clé de session ;
- Production (2020) d'un deuxième message d'invitation, le premier équipement terminal invitant le deuxième équipement terminal, le deuxième message d'invitation comportant :
∘ Une première clé de session, la première clé de session étant configurée par le serveur intermédiaire selon l'attribut de description de la première clé de session, la première clé de session étant destinée à être utilisée pour chiffrer/déchiffrer les données émises par le premier équipement terminal ;
∘ Au moins une deuxième clé de session, la deuxième clé de session étant configurée par le serveur intermédiaire, la deuxième clé de session étant destinée à être utilisée pour chiffrer/déchiffrer les données émises par le deuxième équipement terminal ;
- Emission (2030) du deuxième message d'invitation ;
- Réception (2050) d'un premier message d'acceptation, le deuxième équipement terminal acceptant l'invitation ;
- Production (2060) d'un deuxième message d'acceptation, le deuxième équipement terminal acceptant l'invitation, le deuxième message d'acceptation comportant :
∘ La première clé de session ;
∘ La au moins deuxième clé de session
- Emission (2070) du deuxième message d'acceptation.

2. Procédé de sécurisation de bout en bout d'une communication selon la revendication 1, **caractérisé en ce que** la configuration de la première clé ou de la deuxième clé se fait par une requête à un serveur de sécurité configuré pour mettre en œuvre un générateur (530.1) de séquences aléatoires, les clés étant produites en utilisant ledit générateur de séquences aléatoires.

3. Procédé de sécurisation de bout en bout d'une communication selon la revendication 2, **caractérisé en ce qu'**une requête au serveur de sécurité permet d'obtenir un lot de clés de session, le lot est enregistré par le serveur intermédiaire dans un premier (230.2) buffer de clés, la configuration de la première clé et de la deuxième clé se faisant à partir du contenu du premier buffer, chaque clé enregistrée dans le premier buffer étant à usage unique.

4. Procédé de sécurisation de bout en bout d'une communication selon la revendication 3, **caractérisé en ce que** le serveur intermédiaire comporte un deuxième buffer (230.2) de clés, le deuxième buffer de clés est alimenté par une requête au serveur de sécurité, le serveur intermédiaire utilise le premier buffer de clés tant qu'il contient des clés puis utilise le deuxième le buffer et remplit à nouveau le premier par une requête au serveur de sécurité, les premier et deuxième buffers étant cycliquement utilisés.

5. Procédé de sécurisation de bout en bout d'une communication selon l'une des revendications précédentes **caractérisé en ce que** le protocole d'établissement de session est le protocole SIP.

6. Procédé de sécurisation de bout en bout d'une communication selon la revendication 5, **caractérisé en ce que** :
- La première clé de session est envoyée au premier équipement terminal comme valeur d'un attribut nommé a=hsmkey ;
- La deuxième clé de session est envoyée au premier équipement terminal comme valeur d'un attribut nommé a=crypto ;
- La première clé de session est envoyée au deuxième équipement terminal comme valeur d'un attribut nommé a=crypto ;
- La deuxième clé de session est envoyée au deuxième équipement terminal comme valeur d'un attribut nommé a=hsmkey.

7. Procédé selon de sécurisation de bout en bout d'une communication selon l'une des revendications précédentes, **caractérisé en ce que** la communication est une communication vocale.

8. Procédé selon de sécurisation de bout en bout d'une communication selon l'une des revendications précédentes, **caractérisé en ce que** la communication est une communication vidéo.

## Patentansprüche

1. Verfahren zur End-to-End-Sicherung einer Kommunikation zwischen mindestens einem ersten Endgerät (100) und einem zweiten Endgerät (400), wobei das Herstellen der Kommunikation unter Verwendung eines Sitzungsaufbauprotokolls durchgeführt wird, das den Austausch von Sitzungsschlüsseln ermöglicht, wobei jedes Endgerät einen Sitzungsschlüssel verwendet, um die Kommunikationsdaten zu verschlüsseln, die es überträgt, wobei die Sitzungsschlüssel sicher über einen Zwischenserver (300) unter Verwendung eines Sicherheitszertifikats (230.3) ausgetauscht werden, **dadurch gekennzeichnet, dass** das Verfahren die folgenden Schritte ausführt, die von dem Zwischenserver ausgeführt werden:
- Empfangen (2010) einer ersten Aufforderungsnachricht, wobei das erste Endgerät das zweite Endgerät auffordert, wobei die erste Aufforderungsnachricht mindestens ein Beschreibungsattribut eines ersten Sitzungsschlüssels umfasst;
- Herstellen (2020) einer zweiten Aufforderungsnachricht, wobei das erste Endgerät das zweite Endgerät auffordert, wobei die zweite Aufforderungsnachricht Folgendes umfasst:
o einen ersten Sitzungsschlüssel, wobei der erste Sitzungsschlüssel von dem Zwischenserver in Bezug auf das Beschreibungsattribut des ersten Sitzungsschlüssels konfiguriert wird, wobei der erste Sitzungsschlüssel dazu bestimmt ist, zum Ver-/Entschlüsseln der von dem ersten Endgerät übertragenen Daten verwendet zu werden;
o mindestens einen zweiten Sitzungsschlüssel, wobei der zweite Sitzungsschlüssel von dem Zwischenserver konfiguriert wird, wobei der zweite Sitzungsschlüssel dazu bestimmt ist, zum Ver-/Entschlüsseln der von dem zweiten Endgerät übertragenen Daten verwendet zu werden;
- Übertragen (2030) der zweiten Aufforderungsnachricht;
- Empfangen (2050) einer ersten Akzeptanznachricht, wobei das zweite Endgerät die Aufforderung akzeptiert;
- Herstellen (2060) einer zweiten Akzeptanznachricht, wobei das zweite Endgerät die Aufforderung akzeptiert, wobei die zweite Akzeptanznachricht Folgendes umfasst:
o den ersten Sitzungsschlüssel;
o den mindestens zweiten Sitzungsschlüssel;
- Übertragen (2030) der zweiten Akzeptanznachricht.

2. Verfahren zur End-to-End-Sicherung einer Kommunikation nach Anspruch 1, **dadurch gekennzeichnet, dass** das Konfigurieren des ersten Schlüssels oder des zweiten Schlüssels durch eine Anforderung an einen Sicherheitsserver erfolgt, der konfiguriert ist, um einen Generator (530.1) von zufälligen Sequenzen zu implementieren, wobei die Schlüssel unter Verwendung des Zufallssequenzgenerators erzeugt werden.

3. Verfahren zur End-to-End-Sicherung einer Kommunikation nach Anspruch 2, **dadurch gekennzeichnet, dass** eine Anforderung an den Sicherheitsserver es ermöglicht, einen Satz von Sitzungsschlüsseln zu erhalten, wobei der Satz von dem Zwischenserver in einem ersten (230.2) Schlüsselpufferspeicher gespeichert wird, wobei das Konfigurieren des ersten Schlüssels oder des zweiten Schlüssels abhängig von dem Inhalt des ersten Pufferspeichers erfolgt, wobei jeder in dem ersten Pufferspeicher gespeicherte Schlüssel für den einmaligen Gebrauch bestimmt ist.

4. Verfahren zur End-to-End-Sicherung einer Kommunikation nach Anspruch 3, **dadurch gekennzeichnet, dass** der Zwischenserver einen zweiten Schlüsselpufferspeicher (230.2) aufweist, wobei der zweite Schlüsselpufferspeicher durch eine Anforderung an den Sicherheitsserver versorgt wird, wobei der Zwischenserver den ersten Schlüsselpufferspeicher verwendet, solange er Schlüssel enthält, dann den zweiten Pufferspeicher verwendet und den ersten erneut mit einer Anforderung an den Sicherheitsserver füllt, wobei der erste und der zweite Pufferspeicher zyklisch verwendet werden.

5. Verfahren zur End-to-End-Sicherung einer Kommunikation nach einem der vorherigen Ansprüche, **dadurch gekennzeichnet, dass** das Sitzungsaufbauprotokoll das SIP-Protokoll ist.

6. Verfahren zur End-to-End-Sicherung einer Kommunikation nach Anspruch 5, **dadurch gekennzeichnet, dass**:
- der erste Sitzungsschlüssel als Wert eines a=hsmkey benannten Attributs an das erste Endgerät gesendet wird;
- der zweite Sitzungsschlüssel als Wert eines a=crypto benannten Attributs an das erste Endgerät gesendet wird;
- der erste Sitzungsschlüssel als Wert eines a=crypto benannten Attributs an das zweite Endgerät gesendet wird;
- der zweite Sitzungsschlüssel als Wert eines a=hsmkey benannten Attributs an das zweite Endgerät gesendet wird.

7. Verfahren zur End-to-End-Sicherung einer Kommunikation nach einem der vorherigen Ansprüche, **dadurch gekennzeichnet, dass** die Kommunikation eine Sprachkommunikation ist.

8. Verfahren zur End-to-End-Sicherung einer Kommunikation nach einem der vorherigen Ansprüche, **dadurch gekennzeichnet, dass** die Kommunikation eine Videokommunikation ist.

## Claims

1. Method for providing end-to-end security of a communication between at least one first item of terminal equipment (100) and one second item of terminal equipment (400), communication being established using a session initiation protocol allowing exchange of session keys, each item of terminal equipment using a session key to encrypt the communication data which it transmits, the session keys being exchanged securely via an intermediate server (300) using a security certificate (230.3), **characterised in that** the method carries out the following steps carried out by the intermediate server:
- reception (2010) of a first invite message, the first item of terminal equipment inviting the second item of terminal equipment, the first invite message comprising at least one attribute describing a first session key;
- production (2020) of a second invite message, the first item of terminal equipment inviting the second item of terminal equipment, the second invite message comprising:
o a first session key, the first session key being configured by the intermediate server according to the attribute describing the first session key, the first session key being designed to be used to encrypt/decrypt the data transmitted by the first item of terminal equipment;
o at least one second session key, the second session key being configured by the intermediate server, the second session key being designed to be used to encrypt/decrypt the data transmitted by the second item of terminal equipment;
- transmission (2030) of the second invite message;
- reception (2050) of a first accept message, the second item of terminal equipment accepting the invitation;
- production (2060) of a second accept message, the second item of terminal equipment accepting the invitation, the second accept message comprising:
o the first session key;
o the at least one second session key;
- transmission (2070) of the second accept message.

2. Method for providing end-to-end security of a communication according to claim 1, **characterised in that** configuration of the first key or of the second key is done by a request to a security server configured to execute a random sequence generator (530.1), the keys being produced using said random sequence generator.

3. Method for providing end-to-end security of a communication according to claim 2, **characterised in that** a request to the security server makes it possible to obtain a batch of session keys, the batch is recorded by the intermediate server in a first (230.2) key buffer, configuration of the first key and of the second key being done on the basis of the content of the first buffer, each key recorded in the first buffer being for single use.

4. Method for providing end-to-end security of a communication according to claim 3, **characterised in that** the intermediate server comprises a second key buffer (230.2), the second key buffer is supplied by a request to the security server, the intermediate server uses the first key buffer as long as it contains keys, then uses the second buffer and refills the first one by a request to the security server, the first and second buffers being used cyclically.

5. Method for providing end-to-end security of a communication according to one of the preceding claims, **characterised in that** the session initiation protocol is the SIP protocol.

6. Method for providing end-to-end communication according to claim 5, **characterised in that**:
- the first session key is sent to the first item of terminal equipment as the value of an attribute named a=hsmkey;
- the second session key is sent to the first item of terminal equipment as the value of an attribute named a=crypto;
- the first session key is sent to the second item of terminal equipment as the value of an attribute named a=crypto;
- the second session key is sent to the second item of terminal equipment as the value of an attribute named a=hsmkey.

7. Method for providing end-to-end security of a communication according to one of the preceding claims, **characterised in that** the communication is a voice communication.

8. Method for providing end-to-end security of a communication according to one of the preceding claims, **characterised in that** the communication is a video communication.
